# EUROPEAN PATENT APPLICATION

(11) **EP 2 875 911 A1**
(43) Date of publication of application: **27.05.2015**
(21) Application number: 13460079.0
(22) Date of filing: 13.12.2013
(51) Int. Cl.: B25J 5/00, B25J 19/00

(54) **Wheeled mobile robot having a battery replaceable through opening in the wheels**

(30) Priority: 25.11.2013 PL 40623613
(71) Applicant: Przemyslowy Instytut Automatyki i Pomiarow PIAP, 02-486 Warszawa (PL)
(72) Inventor: Zboinski, Mariusz, 00-086 Warszawa (PL)

(57) **Abstract**

A wheeled mobile robot with wheels (9) mounted on a robot body (1) in which a battery socket (10) is provided, wherein each wheel has a rim (7) comprising an opening (8) for inserting a battery (2) into the body, the battery being blocked by elastic fasteners (3) and the body having elastic connectors (6), and wherein each rim is provided with a protecting cover (4) mounted to the rim by screws (5).

## Description

The subject of invention is battery module dedicated for mobile devices, particularly for wheeled mobile robots.

In small mobile devices common problem is discharging of batteries after too short time in regard to expected time, what is caused by dimensions, more precisely volume of batteries mounted in small mobile robots. In traditional, well known solutions, battery is mounted inside mobile platform, what determines replenishment method of power medium. Batteries after discharging need to be recharged, what immobilizes mobile platform for time of battery recharging. Additionally in case when battery power level falls below expected values necessary is service of this type construction by producer.

From polish patent description No. PL 210815 B1 is known wheeled robot equipped with housing and connected to it chassis, where inside housing are located control system boards and batteries and also drive motor mounted to housing below control system boards and batteries, coupled by power transmission assembly with wheels.

From Canadian patent description No. CA 2444784 A1 is known mobile throwing robot, equipped with housing inside which are located control system boards and batteries and also drive motor mounted to housing below control system boards and batteries, coupled by power transmission assembly with wheels.

In this well known technical solutions, battery replacement is combined with partial disassembly of housing to enable dismounting of used and mounting new battery. It causes withdraw from service for time of replacement.

The aim of invention is battery module, enabling it replacement in a short period of time.

Battery module is dedicated especially to wheeled mobile robots equipped with wheels mounted in robot body in which is located battery socket, has in at least one wheel rim shaped slot to inserting battery, blocked by elastic connectors connected with battery, where rim is provided with protecting cover mounted to rim by screws.

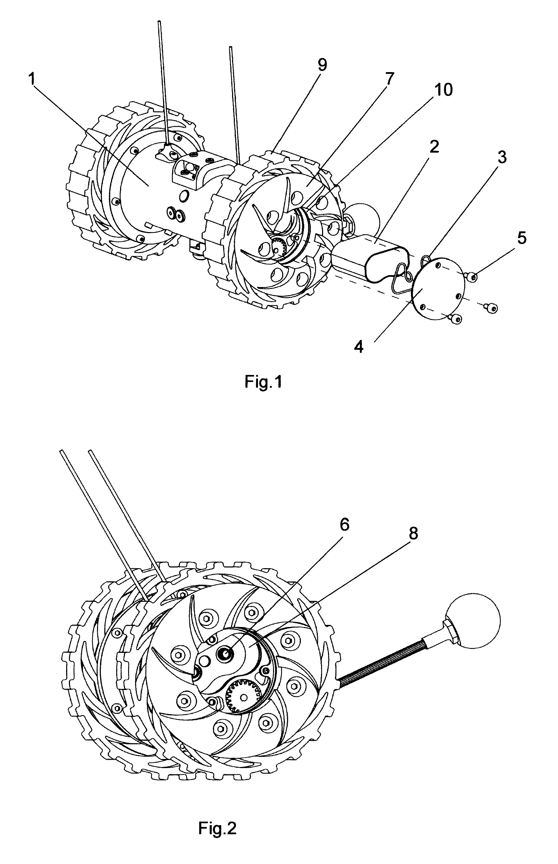

The invention is illustrated on fallowing pictures, in which Figure 1 shows wheeled robot with battery module in a perspective view, and Figure 2 - a longitudinal view from body front with battery socket.

Battery module dedicated especially to wheeled mobile robots with wheels 9 mounted in robot body 1, in which is located battery socket 10. In at least one wheel 9 rim 7 shaped slot 8 to inserting battery 2 to body 1 socket 10, blocked by elastic fastener 3. Body 1 socket 10 is equipped with elastic connectors 6 connected with battery 2. Rim 7 is provided with protecting cover 4 mounted to rim 7 by screws 5. Elastic connectors 6 connect battery 2 with control systems and drive systems located inside body 1. After inserting battery 2 to body 1 socket 10 it is blocked by elastic fastener 3. Elastic connectors 6 provide stable electric connection between battery 2 and control and drive systems situated inside body 1.

Solution according this invention provides fast replacement of battery 2 after its discharging without need to stationary charging of robot or involving service station. Time of battery replacement takes at most a few minutes and it can be made by robot user. When battery power level falls below expected values it can be replaced without need of involving service station.

## Claims

1. Battery module dedicated especially to wheeled mobile robots with wheels 9 mounted in robot body 1, in which is located battery socket 10. In at least one wheel 9 rim 7 shaped slot 8 to inserting battery 2 to body 1 socket 10, blocked by elastic fastener 3. Body 1 socket 10 is equipped with elastic connectors 6 connected with battery 2. Rim 7 is provided with protecting cover 4 mounted to rim 7 by screws 5.
